# EUROPÄISCHE PATENTSCHRIFT

(11) **EP 0 531 840 B1**
(45) Veröffentlichungstag und Bekanntmachung des Hinweises auf die Patenterteilung: **12.06.1996**
(21) Anmeldenummer: 92114822.7
(22) Anmeldetag: 29.08.1992
(51) Int. Cl.: B29C 70/46, B29B 11/16

(54) **Verfahren zur Herstellung eines faserverstärkten Kunststoff-Formteils sowie Kunststoff-Formteil**
Method for producing fibre reinforced plastic moulding and moulding produced by this method
Procédé pour fabrication d'une pièce moulée plastique renforcée par des fibres, ainsi que pièce moulée obtenue

(30) Priorität: 10.09.1991 DE 4129959
(43) Veröffentlichungstag der Anmeldung: 17.03.1993
(73) Patentinhaber: Menzolit-Fibron GmbH, 75015 Bretten (DE)
(72) Erfinder: Ehnert, Gerd, W-7529 Forst (DE); Bieniek, Klaus, Dipl.-Chem., W-7527 Kraichtal-Menzingen (DE); Steinbach, Karin, Dipl.-Ing., W-7518 Bretten-Neibsheim (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- WO-A-91/05652
- FR-A- 1 103 052
- GB-A- 611 708
- GB-A- 2 225 277
- US-A- 4 302 499
- MACHINE DESIGN Bd. 62, Nr. 12, 7. Juni 1990, CLEVELAND, OHIO, U.S.A. Seiten 46 - 49 MOLLMAN 'Liquid Composite Molding Moves into Structures'

## Beschreibung

Die Erfindung betrifft ein Verfahren zum Herstellen eines faserverstärkten Kunststoff-Formteils sowie ein faserverstärktes Kunststoff-Formteil.

Es ist bekannt, Formteile auf der Basis von faserverstärkten Reaktionsharzen (SMC - Sheet Moulding Compound) in einer Preßform unter Hitzeeinwirkung einstufig herzustellen. Die Faserverstärkung gibt dem fertigen, duroplastischen SMC eine gute Festigkeit, so daß sich SMC-Formteile insbesondere für den Automobilbau eignen. Nachteilig ist jedoch, daß aufgrund des hohen Druckes bei der Herstellung sehr leicht eine Fließorientierung der Verstärkungsfasern auftritt. So lassen sich keine definierten Verstärkungsstrukturen realisieren. Genauso werden eingelegte Glasgewebe oder dergleichen in der Preßform in ihrer Struktur und Lage aufgrund des hohen Druckes beim Einströmen und Verteilen des faserhaltigen SMC verändert oder zerstört. Das gleiche Schicksal erleiden die aus dem RTM-Verfahren bekannten Verstärkungsmatten, da diese nicht ausreichend fest gebunden sind.

Aus der US 4,302,499 ist ein Verfahren zur Herstellung eines faserverstärkten Formteils bekannt, nach dem zunächst ein endloser Trennfilm mit Duroplast beschichtet wird; anschließend werden zerschnittene Einzelfasern aufgestreut. In einem weiteren Schritt wird bei einer Ausführungsform ein wiederum mit Duroplast beschichteter Film über die Einzelfasern aufgelegt. Diese sandwichartige Anordnung wird dann durch Druckrollen zum Kompaktieren zum Durchtränken und Beschichten der Einzelfasern hindurchgeleitet; anschließend wird das Endlosmaterial zum Aushärten aufgerollt. Bei einer anderen Ausgestaltung wird zunächst über den zweiten Film eine Gewebelage gelegt, die dann mit Duroplast versehen wird, wodurch die hierdurch gebildete Einheit über die Fasern geführt wird. Es erfolgt wiederum eine Verdichtung; die Ablage erfolgt hier in Lagen. Nach dem Aushärten können die Filme, die lediglich als Trennmaterial dienen, entfernt werden.

Zur Herstellung von Formteilen werden Zuschnitte aus dem wie vorstehend hergestellten Endlosmaterial geschnitten. Bei einer ersten Ausgestaltung wird eine Gewebelage über eine Form und anschließend ein solcher Zuschnitt aufgelegt, und es erfolgt ein Verpressen und Formen des faserverstärkten Kunststoffteils; bei einer weiteren Ausgestaltung kann zusätzlich noch eine Gewebelage auf den Thermoplastzuschnitt gelegt werden; bei der vorstehend beschriebenen Ausgestaltung des Endlosmaterials mit integrierter Gewebelage kann ein Zuschnitt als solcher in die Form eingelegt werden, aber auch hier kann eine weitere Gewebelage aufgelegt werden.

Die WO 91/05652 zeigt ein Verfahren zur Herstellung einer Endlosfasermatte durch Tränken sowohl mit thermoplastischem als auch mit duroplastischem Bindematerial, wobei die Matte zunächst auf eine Temperatur von über 93,3 °C erhitzt und dann zum Aushärten in eine Form eingebracht wird, wobei aufgrund der Hitze das Thermoplastmaterial die Verbindungs- oder Schnittpunkte der Fasern umströmt, während das Duroplastmaterial aushärtet; anschließend erfolgt ein Kühlen, um den Thermoplast zu verfestigen. Schließlich wird die Matte zwischen Druckrollen hindurchgeführt, um Glaseinschlüsse zu zerstören.

Der Erfindung liegt die Aufgabe zugrunde, ein Verfahren zum Herstellen eines faserverstärkten Kunststoff-Formteils und ein solches Kunststoff-Formteil zu schaffen, bei denen unter Vermeidung der vorgenannten Nachteile definierte Verstarkungsstrukturen und hohe Festigkeiten erreicht werden können.

Erfindungsgemäß wird die genannte Aufgabe durch ein Verfahren der eingangs genannten Art mit den kennzeichnenden Merkmalen des Anspruchs 1 sowie durch ein faserverstärktes Kunststoff-Formteil nach dem Anspruch 14 gelöst.

Durch die Verwendung einer duroplastisch ausgehärteten Verstärkungsmatte wird eine in ihrer Struktur und Lage definierte Verstärkung des Formteils erreicht. Ein Verschieben der Matte oder ein Verändern ihrer Struktur ist selbst bei hohen Verarbeitungstemperaturen und/oder -drücken nicht mehr möglich. Aufgrund ihrer Festigkeit muß die vorgeformte Verstärkungsmatte die Preßform nicht vollständig ausfüllen. Zudem ist auch eine faserverstärkte Formmasse zur Herstellung eines Formteils verwendbar. Hieraus ergibt sich der Vorteil, daß Oberflächen durch die Formmasse und nicht durch die rauhere Matte gebildet werden können. Neben der verbesserten Elastizität, Biegefestigkeit und Schlagzähigkeit des fertigen KunststoffFormteils wird die Reproduzierbarkeit und damit die Fertigungssicherheit erhöht, so daß Prüfvorgänge reduziert werden können.

Als Matte wird ein Gewebe, ein Gewirke oder ein Gelege bevorzugt aus Glas-, Kohle- und/oder Aramidfasern verwendet. Das duroplastische Bindemittel verbindet die einzelnen Fasern an ihren Kreuzungs- bzw. Berührungspunkten miteinander. Die Festigkeit der ausgehärteten Matte wird durch die Stabilität und Anordnung der Kreuzungspunkte sowie durch die Belastbarkeit der Fasern selbst bestimmt. Ebenso können auch Schnittmatten und Kombinationen unterschiedlicher Fasertypen und Bindungsarten verwendet werden.

Bevorzugt wird ein Hybridharz auf Polyurethanbasis in Kombination mit einem thermisch und/oder UV-aktivierbaren Härter verwendet. So bleibt das Harz thermoplastisch verformbar zur Herstellung eines Vorformlings. Je nach verwendetem Härter wird erst bei Erwärmen über eine Grenztemperatur hinaus oder bei Bestrahlung mit UV-Licht die Aushärtung des Bindemittels initiiert. Gerade bei einer Weiterverarbeitung der Matte unter Hitzeeinwirkung hat sich die Verwendung eines thermisch aktivierbaren Härters, insbesondere in Kombination mit dem UV-aktivierbaren Härter, als vorteilhaft erwiesen, um eine vollständige Aushärtung der Matte sicherzustellen. So sorgt dieser Härter auch für eine vollständige Aushärtung bei UV-Härtung, da hierbei meistens die Aktivierungstemperatur des thermisch-aktivierten Härters überschritten wird.

Diese Aktivierungstemperatur, bis zu der sich die hatte thermoplastisch reversibel erwärmen läßt, beträgt bevorzugt mindestens 50 °C, damit die Hatte im erwärmten Zustand sehr leicht vorzuformen, aber bei Raumtemperatur möglichst steif ist.

In einer bevorzugten Verfahrensvariante wird ein Vorformling dadurch hergestellt, daß die erwärmte Matte gegebenenfalls unter Auflage einer dichten verformbaren Abdeckung durch Anlegen von Unterdruck über einer Form abgeformt wird. Hierzu wird die Matte so stark erwärmt, daß sie leicht verformbar ist, aber eine Aushärtung des Bindersystems noch nicht erfolgt.

Um den weichen Vorformling zu fixieren, wird dieser vor dem Aushärten abgekühlt. Dies wird bei der genannten Verfahrensvariante in sehr einfacher Weise dadurch realisiert, daß die Form gekühlt wird. So wird der erwärmte und daher weiche Vorformling beim Abformen durch den Kontakt mit der Form abgekühlt und dadurch steif. Sodann kann dieser entnommen und ausgehärtet werden.

Nach einer weiteren Ausgestaltung des erfindungsgemäßen Verfahrens ist vorgesehen, daß der Vorformling vor dem Pressen des Formteils durch Erwärmen auf eine über der Vorformtemperatur liegende Temperatur und/oder UV-Bestrahlung duroplastisch ausgehärtet wird. Dadurch ist sichergestellt, daß die Struktur und Lage der Verstärkung im Formteil auch dann nicht verändert wird, wenn das Formteil unter Hitzeeinwirkung preßgeformt wird. Das Aushärten durch Erwärmen oder UV-Bestrahlung ist durch den verwendeten Härter vorgegeben und kann bei kombinierter Verwendung auch wahlweise erfolgen. Ein Erwärmen kann durch IR-BeStrahlung oder durch das Formwerkzeug direkt bzw. indirekt über Wärmeleitung erfolgen. Bei einer kontinuierlichen Herstellung von imprägnierten Matten und deren anschließender Weiterverarbeitung ist auch ein nach einer bestimmten Zeit selbstaushärtendes Bindersystem einsetzbar. In jedem Fall wird die Matte erst mit einem inaktivierten Bindersystem getränkt, so daß eine thermoplastische Verarbeitung beim Vorformen ermöglicht wird.

In einer Variante wird der Vorformling dadurch hergestellt, daß zunächst einzelne, gegebenenfalls einander überlappende Bereiche des Vorformlings ausgehärtet werden und anschließend der Vorformling vollständig ausgehärtet wird. So können insbesondere auch kastenförmige Vorformlinge, die ein Übereinanderfalten von Bereichen der Verstärkungsmatte erfordern, hergestellt werden Eine partielle Aushärtung (Verschweißen der überlappten Verstärkungsmatten) kann beispielsweise durch lokales Erwärmen, beispielsweise mit IR-Strahlung, oder Bestrahlung mit UV-Licht realisiert werden.

Bevorzugt wird der ausgehärtete Vorformling mit der Formmasse unter Hitzeeinwirkung zum Formteil preßgeformt. Dadurch wird einerseits eine vollständige Aushärtung des Bindersystems bei Verwendung eines thermisch aktivierbaren Härters sichergestellt und andererseits auch eine chemische Verbindung von Formmasse und Bindemittel des Vorformlings bei einer entsprechenden Auswahl ermöglicht.

Wenn zwei Vorformlinge mit dazwischen liegender Formmasse zum Formteil preßgeformt werden, ergibt sich ein besonders stabiles, beidseitig an der Oberfläche verstärktes Formteil.

Bei der Verwendung faserverstärkter Formmasse, wie glasfaserverstärktem Reaktionsharz (SMC), ergeben sich hochfeste Formteile. Dabei kann neben der mechanischen Verbindung zwischen der offenen Struktur des Vorformlings und der Formmasse zusätzlich auch eine chemische Verbindung der duroplastischen Formmasse mit dem duroplastischen Bindersystem auftreten und die Festigkeitseigenschaften zusätzlich verbessern.

Ein sehr haltbares und stabiles Formteil ergibt sich, wenn SMC mit etwa 30 Gew. -% Glasfaseranteil als Formmasse und eine imprägnierte Glasfasermatte mit mindestens 80 Gew. -% Glasfaseranteil als Vorformling zum Formteil gepreßt wird. Experimente haben hier gezeigt, daß damit eine hohe Stabilität bei guter Oberflächenqualität erreichbar ist.

Um eine gute Oberflächenqualität der Formteile, insbesondere bei Verwendung im Automobilbau zu erreichen, ist vorgesehen, daß Sichtseiten des Formteils bildende Oberflächenbereiche durch die Formmasse gebildet sind. Hierbei wird ausgenützt, daß die Formmasse einen geringeren Faseranteil als der Vorformling aufweist und dementsprechend eine glattere Oberfläche bildet.

Während es an sich bekannt ist, vorimprägnierte Glasmatten und -gewebe als eigenständige Lagenpakete zu plattenförmigen Formteilen zu verpressen, dient bei dem erfindungsgemäßen Vorprodukt und seiner Herstellung die Imprägnierung nur zur Fixierung der Faserstränge, während die Herstellung des fertigen Formteils nicht alleine durch das Vorprodukt, sondern nur durch dieses und die Formmasse gemeinsam erfolgt. Bei dem erfindungsgemäßen Verfahren zur Herstellung eines Formteils ergibt sich der Vorteil, daß ein millimetergenaues Einlegen des Vorformlings in die Preßform für das Formteil nicht erforderlich ist, da ein Harztransport im Vorformling nicht erfolgt. Dem gegenüber ist bei einem Prepreg nach dem Stand der Technik ein fast exaktes Aufeinanderlegen sowie paßgenaues Einlegen in das Werkzeug unabdingbar, da es ansonsten zu ungleichmäßigem Druckaufbau, verbunden mit Qualitätsverlusten kommt und die spätere Verstärkungswirkung allein von der genauen Plazierung der Matten bzw. des Gewebes abhängig ist und darüber hinaus durch das Fließen des Harzes beeinträchtigt werden kann. Die erfindungsgemäßen Fasermatten können in herkömmlicher Weise mit dem Bindemittel getränkt werden und sind ohne separaten Trocknungsprozeß aufwickelbar. Die Lagerzeit der Vorprodukte ist uneingeschränkt, ohne daß spezielle Lagervorschriften einzuhalten sind. Die Vorprodukte sind uneingeschränkt verarbeitbar. Bei herkömmlichen Prepregs müssen die Harzmischungen bei der Verformungstemperatur fließfähig sein, damit ein Fließen erfolgen kann, während beim Erfindungsgegenstand kein Harzfluß im eigentlichen Vorprodukt erfolgt.

Nachfolgend wird die Erfindung anhand einer Zeichnung näher erläutert. Es zeigen:
- Figur 1: eine imprägnierte Fasermatte;
- Figur 2a-c: eine Herstellung eines Kunststoff-Formteils;
- Figur 3a-c: eine Herstellung eines Vorformlings mit UV-Härtung;
- Figur 4a-f: Herstellungsstufen einer InLine-Verarbeitung;
- Figur 5a-d: eine Herstellung eines gefalteten Vorformlings; und
- Figur 6a-d: verschiedene Kunststoff-Formteile im Schnitt.

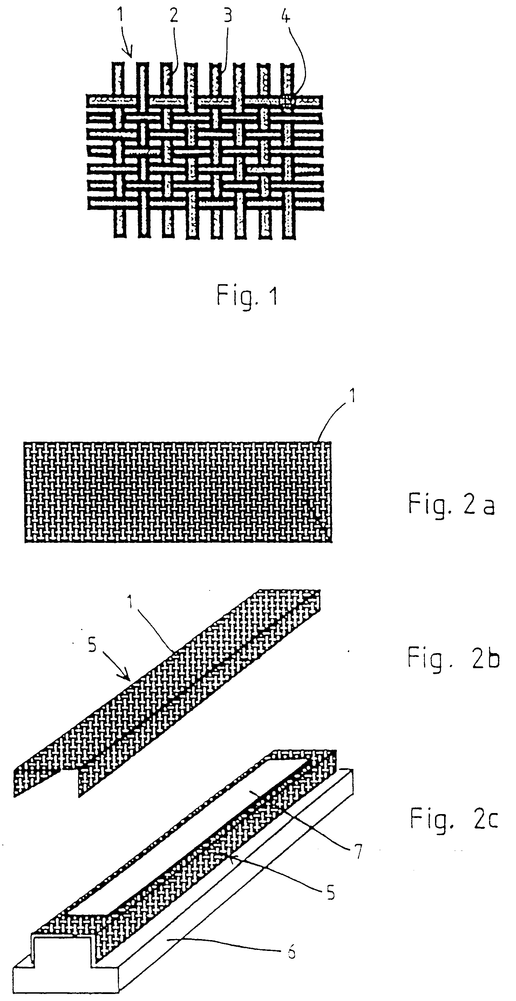

Figur 1 zeigt eine Matte 1 mit Einzelfasern 2. Diese sind mit einem duroplastisch aushärtbaren Bindemittel 3 derart ummantelt, daß die offene, d.h. durchlässige oder poröse Struktur der Fasermatte als solche erhalten bleibt. Die Einzelfasern weisen Längen auf, die mindestens in der Größenordnung der linearen ebenen Erstreckungsabmessungen der Fasermatte liegen; die Fasermatte besteht vorzugsweise aus Endlosfasern. Das Bindemittel 3 verklebt Kreuzungspunkte 4 der Einzelfasern 2, so daß die Form und Struktur der Matte 1 festgelegt ist.

Im Ausführungsbeispiel wird die Matte 1, ein Glasfasergewebe, mit dem duroplastisch aushärtbaren Bindersystem 3, imprägniert. Es werden hier ein Hybridharz bestehend aus einem oligomeren Polyesterpolyol und einem Diphenylmethandiisocyanat (Arimax 1100 und 6020, Fa. AshlandSüdchemie-Kernfest) sowie ein als Flüssiggemisch TM-CH-HA-M1 vorliegender peroxidischer Härter (Fa. PeroxidChemie) und ein UV-aktivierbares Härtersystem Irgacure 369 (Fa. Ciba-Geigy) verwendet. Das Glasfasergewebe ist vorab mit einer Kunststoffschlichte versehen. Dadurch haftet das Bindemittel 3 besser. Das Harz-Härter-System wird nach einer Woche bei Raumtemperatur fest und verhält sich bis zu 60 °C reversibel thermoplastisch. Erst oberhalb dieser Temperatur oder bei UV-Bestrahlung beginnt das Harz auszuhärten. Der Glasfaseranteil der imprägnierten Matte 1 beträgt ca. 80 %.

In den Figuren 2a bis 2c ist die Verarbeitung der imprägnierten Matte 1 nach Figur 1 in einzelnen Schritten dargestellt. Die Matte 1 ist bei Raumtemperatur steif und wird zunächst zugeschnitten (Figur 2a). Unter Erwärmen wird ein Vorformling 5 aus der Matte 1 geformt (Figur 2b). Der Vorformling 5 wird ausgehärtet und anschließend in einer Preßform 6 zusammen mit Formmasse 7 zu einem Kunststoff-Formteil gepreßt (Figur 2c). Im Ausführungsbeispiel wird als Formmasse 7 ein Standard-SMC verwendet, das als solches vorzugsweise etwa 30 % Faseranteil aufweist. Dieses besteht aus reaktionsfähigen ungesättigten Polyesterharzen, Füllstoffen, Additiven und Glasfasern. Die Verarbeitungstemperatur liegt bei ca. 130 bis 165 °C.

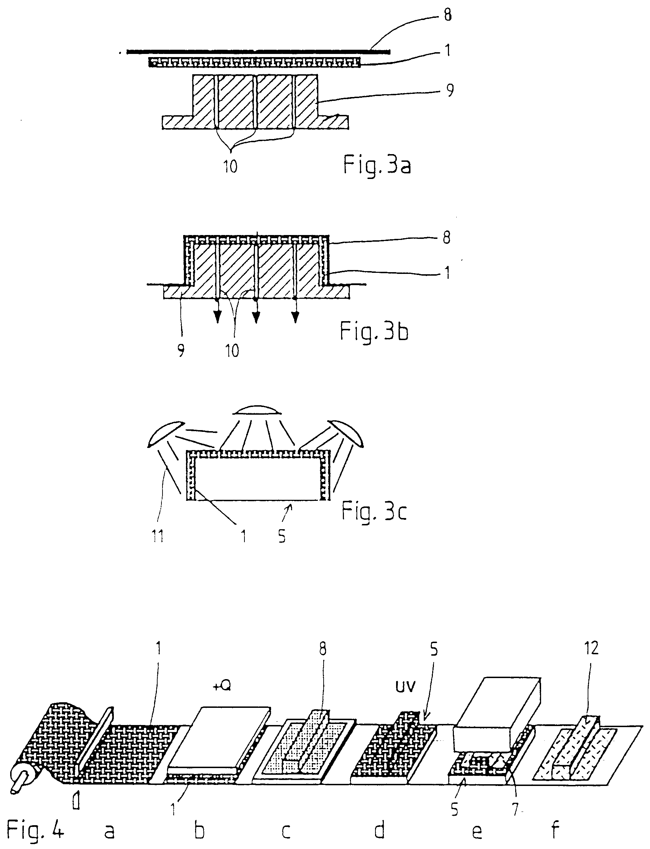

Den Figuren 3a bis 3c sind die einzelnen Schritte einer Verfahrensvariante zur Herstellung zunächst des Vorformlings 5 zu entnehmen. Die getränkte Matte 1 wird auf ca. 45 bis 50 °C erwärmt. Bei diesen Temperaturen verhält sich das Bindersystem thermoplastisch und härtet noch nicht aus. Mit Hilfe eines Gummituchs 8 wird die erwämte Matte 1 mit Unterdruck auf ein gekühltes Werkzeug 9 aufgeformt. Hierzu weist das Werkzeug 9 Vakuumkanäle 10 auf, durch die das Gummituch 8 und damit auch die dazwischen liegende Matte 1 angesaugt werden. Das gekühlte Werkzeug 9 kühlt die erwärmte Matte 1 bei Berührung ab, so daß diese wieder steif wird. Der so erhaltene Vorformling 5 wird vom Werkzeug 9 abgenommen und unter UV-Licht aufgrund des UV-initiierten Härters ausgehärtet. Hierbei wird das Harz in einen duroplastischen Zustand überführt.

Bei dem verwendeten Bindersystem genügt eine UV-Bestrahlung von 5 Minuten. Dabei wird der Härter auch thermisch aktiviert, so daß eine vollständige Aushärtung sichergestellt ist.

Figur 4 zeigt in einzelnen Schritten a bis f einen kontinuierlichen Verfahrensablauf, eine sogenannte In-LineVerarbeitung. Im Schritt a wird die Matte 1 zugeschnitten. Anschließend wird die Matte 1 erwärmt (b) und zu einem Vorformling 5 gemäß den Verfahrensabschnitten nach Figur 3a und b unter Vakuum mit Hilfe eines Gummituchs 8 geformt. Im nächsten Schritt d wird der erhaltene Vorformling 5 UV-gehärtet. Im Schritt e wird der gehärtete Vorformling 5 zusammen mit der Formmasse 7, hier dem SMC, zu einem Formteil 12 bei Temperaturen von 130 bis 165 °C gepreßt. Nach Abkühlen ist ein Formteil 12 fertiggestellt (f).

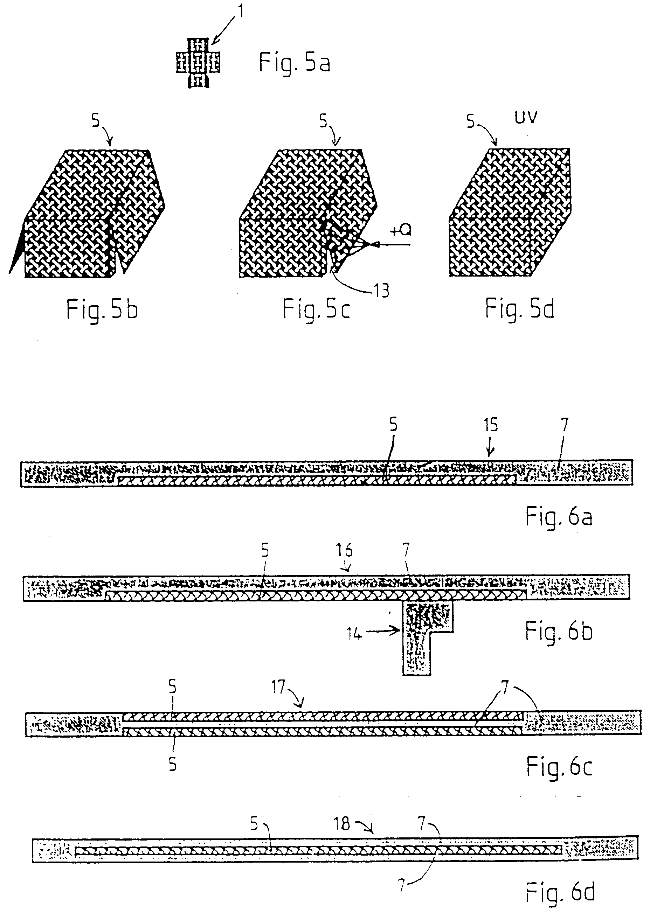

Figur 5a bis d zeigt einen alternativen Verfahrensablauf zur Herstellung eines Vorformlings 5, der durch Falten erhalten wird. Hierbei wird die gemäß Figur 5a zugeschnittene Matte 1 unter Erwärmen gemäß Figur 5b geformt. Gezielt werden überlappende Bereiche 13 der imprägnierten Matte 1 so stark erwärmt, daß diese miteinander verklebt und gegebenenfalls sogar duroplastisch ausgehärtet werden (Figur 5c). Anschließend erfolgt die vollständige Aushärtung des Vorformlings 5 durch UV-Bestrahlung gemäß Figur 5d. Auf diese Weise lassen sich fast beliebige Vorformlinge 5 herstellen.

Die Figuren 6a bis 6d zeigen Formteile 15 bis 18 im Schnitt. Das Formteil 15 (Figur 6a) ist einseitig mit einem Vorformling 5 verstärkt.

Das Formteil 16 (Figur 6b) weist zudem an der durch den Vorformling 5 verstärkten Seite eine Rippe 14 auf. Hier wird zur Herstellung ein entsprechender Ausschnitt im Vorformling 5 vorgesehen, so daß die Formmasse 7 durch den Vorformling 5 hindurch in den die Rippe 14 ausbildenden Bereich eines hier nicht dargestellten Preßwerkzeugs strömen kann.

Das Formteil 17 (Figur 6c) ist beidseitig mit einem Vorformling 5 verstärkt. Hierdurch ergibt sich eine besonders hohe Belastbarkeit.

Beim Formteil 18 (Fig. 6d) ist der Vorformling 5 mittig angeordnet, d.h. er hatte beim Preßformen keinen direkten Kontakt mit dem Werkzeug. Das heiße Werkzeug kommt hier nur mit der Formmasse 7 in Kontakt, so daß der Vorformling 5 zu Beginn des Preßvorgangs eine ausreichende Festigkeit aufweist, um seine Form beizubehalten, während sich die Formmasse 7 im Formwerkzeug verteilt.

Experimente haben gezeigt, daß nach einem der genannten Verfahren hergestellte Formteile eine wesentlich höhere Stabilität, Elastizität, Biegefestigkeit und Schlagzähigkeit gegenüber herkömmlichen Formteilen aufweisen. Es ist selbstverständlich, daß je nach gewünschtem Elastizitätsverhalten ein Gewebe, ein Gewirke oder ein Gelege als Verstärkungsmatte eingesetzt wird. Entsprechend sind beliebige Kombinationen von Verstärkungsmaterialien, wie Glasfasern, Kohlefasern oder Aramidfasern, möglich. Da die Fasermatte duroplastisch ausgehärtet wird, ergibt sich gegenüber herkömmlichen mit Thermoplasten gebundenen Matten eine definierte Verstärkungsstruktur und damit eine höhere Belastbarkeit des fertigen Formteils. Wesentlich ist auch, daß der Vorformling eine möglichst offene, rauhe Oberfläche aufweist, so daß sich eine gute mechanische Verbindung mit der Formmasse ergibt, die insbesondere bei Verwendung einer faserverstärkten Formmasse eine hohe Belastbarkeit des fertigen Formteils sicherstellt. Verstärkungsfasern stellen zusätzlich einen sehr guten mechanischen Kontakt zwischen Formmasse und Vorformling her. Die Stabilität wird des weiteren dadurch erhöht, daß das duroplastische Bindersystem des Vorformlings eine chemische Verbindung mit einer duroplastischen Formmasse eingehen kann.

## Patentansprüche

1. Verfahren zum Herstellen eines faserverstärkten Kunststofformteils, dadurch gekennzeichnet, daß zunächst eine mit einem Bindemittel aus einem Harz-Härter-System versehene Fasermatte bei einer Temperatur, bei der sich das Harz-Härter-System thermoplastisch verhält, vorgeformt und anschließend duroplastisch zum Vorformling ausgehärtet wird, daß anschließend SMC-Formmasse auf den derart hergestellten Vorformling aufgegeben und mit diesem zum Formteil verpreßt wird.

2. Verfahren nach Anspruch 1, dadurch gekennzeichnet, daß ein Gewebe, Gewirke oder Gelege insbesondere aus Glas-, Kohle- und/oder Aramidfasern als Matte verwendet wird.

3. Verfahren nach Anspruch 1 oder 2, dadurch gekennzeichnet, daß die Fasermatte aus Fasern hergestellt wird, die mindestens eine Länge aufweisen, die im wesentlichen den linearen ebenen Erstreckungsabmessungen der Fasermatte entspricht, wobei die Fasern vorzugsweise Endlosfasern sind.

4. Verfahren nach einem der vorangehenden Ansprüche, dadurch gekennzeichnet, daß ein Hybridharz auf Polyurethanbasis verwendet wird.

5. Verfahren nach einem der vorangehenden Ansprüche, dadurch gekennzeichnet, daß ein thermisch und/oder ein UV-aktivierbarer Härter verwendet wird.

6. Verfahren nach einem der vorangehenden Ansprüche, dadurch gekennzeichnet, daß die Fasern der Fasermatten derart mit Bindemittel versehen, insbesondere lediglich ummantelt werden, daß die an sich gegebene offene (durchlässige) Struktur der Fasermatte erhalten bleibt.

7. Verfahren nach Anspruch 6, dadurch gekennzeichnet, daß die Fasermatte mit lediglich soviel Bindemittel versehen wird, daß der Gewichtsanteil der Fasermatte am Gesamtgewicht von Fasermatte und Bindemittel mehr als 70 %, vorzugsweise mindestens 80 % beträgt.

8. Verfahren nach einem der vorangehenden Ansprüche, dadurch gekennzeichnet, daß die mit Bindemittel versehene Fasermatte - gegebenenfalls unter Auflage einer dichten, formbaren Abdeckung - durch Anlegen von Unterdruck über einer Form abgeformt wird.

9. Verfahren nach einem der vorangehenden Ansprüche, dadurch gekennzeichnet, daß der Vorformling vor dem Aushärten abgekühlt wird, indem insbesondere die Form gekühlt wird.

10. Verfahren nach einem der vorangehenden Ansprüche, dadurch gekennzeichnet, daß der Vorformling als solcher - vor dem Pressen des Formteils - durch Erwärmen auf eine über der Formtemperatur liegende Temperatur und/oder UV-Bestrahlung duroplastisch ausgehärtet wird.

11. Verfahren nach einem der vorangehenden Ansprüche, dadurch gekennzeichnet, daß zunächst einzelne, gegebenenfalls einander überlappende Bereiche des Vorformlings ausgehärtet werden und anschließend der Vorformling vollständig ausgehärtet wird.

12. Verfahren nach einem der Ansprüche 1 bis 11, dadurch gekennzeichnet, daß zumindestens ein ausgehärteter Vorformling mit der Formmasse, insbesondere zwei Vorformlinge mit dazwischen liegender Formmasse, unter Hitzeeinwirkung zum Formteil preßgeformt wird bzw. werden.

13. Verfahren nach einem der Ansprüche 1 bis 12, dadurch gekennzeichnet, daß eine faserverstärkte Formmasse insbesondere in Form eines faserverstärkten Reaktionsharzes (SMC - sheet moulding compound) verwendet wird.

14. Faserverstärktes Kunststoff-Formteil, dadurch gekennzeichnet, daß es aus mindestens einem unter Erwärmen aus einer mit duroplastisch aushärtendem, bei der Erwärmungstemperatur thermoplastischem Bindemittel (3) versehenen Fasermatte (1) gebildenten Vorformling (5) und auf diesem aufgegebener faserverstärkter SMC-Formmasse gepreßt ist.

15. Faserverstärktes Kunststoff-Formteil nach Anspruch 14, dadurch gekennzeichnet, daß die Fasern (2) des Vorformlings (5) mindestens eine Länge aufweisen, die im wesentlichen den linearen ebenen Erstreckungsabmessungen des Vorprodukts bzw. der Fasermatte (1) entsprechen und vorzugsweise Endlosfasern (2) sind.

16. Faserverstärktes Kunststoff-Formteil nach Anspruch 14 oder 15, dadurch gekennzeichnet, daß die Fasern (2) des Vorformlings (5) derart mit dem Bindemittel (3) versehen, insbesondere ummantelt sind, daß die an sich gegebene offene (durchlässige) Faserstruktur beim Vorformling (5) erhalten ist.

17. Faserverstärktes Kunststoff-Formteil nach Anspruch 16, dadurch gekennzeichnet, daß der Vorformling (5) nach Imprägnierung bei Raumtemperatur steif ist.

18. Faserverstärktes Kunststoff-Formteil nach einem der Ansprüche 16 oder 17, dadurch gekennzeichnet, daß das Bindemittel (3) bis zur Aktivierungstemperatur seines Härters, die insbesondere bei mindestens 50° liegt, thermoplastisch bleibt und erst darüber aushärtet.

19. Faserverstärktes Kunststoff-Formteil nach einem der Ansprüche 14 bis 18, dadurch gekennzeichnet, daß das Bindemittel (3) ein Harz auf Polyurethanbasis mit einem thermisch und/oder UV-aktivierbaren Härter aufweist.

20. Faserverstärktes Kunststoff-Formteil nach einem der Ansprüche 14 bis 19, dadurch gekennzeichnet, daß die Fasermatte (1) ein Gewebe, ein Gewirke oder ein Gelege insbesondere aus Glas-, Aramid- und/oder Kohlefasern ist.

21. Faserverstärktes Kunststoff-Formteil nach einem der Ansprüche 14 bis 20, dadurch gekennzeichnet, daß der Faseranteil des Vorformlings (5) nach Imprägnierung mehr als 70 Gewichtsprozent, insbesondere mindestens 80 Gewichtsprozent beträgt.

22. Faserverstärktes Kunststoff-Formteil nach einem der Ansprüche 14 bis 21, dadurch gekennzeichnet, daß es mehrere Vorformlinge aufweist.

23. Faserverstärktes Kunststoff-Formteil nach einem der Ansprüche 14 bis 22, dadurch gekennzeichnet, daß Sichtseiten bildende Oberflächenbereiche durch die Formmasse (7) gebildet sind.

## Claims

1. Method for producing a fibre-reinforced plastic moulding, characterized in that initially a fibre mat provided with a binder from a resin-hardener system is preshaped at a temperature, at which the resin-hardener system behaves thermoplastically and is then cured in thermosetting manner to a blank and subsequently SMC moulding material is fed onto the thus produced blank and is moulded therewith to the moulding.

2. Method according to claim 1, characterized in that use is made of a woven or knitted fabric or interlaid scrim, particularly of glass, carbon and/or aramide fibres to form the mat.

3. Method according to claim 1 or 2, characterized in that the fibre mat is produced from fibres at least having a length substantially corresponding to the linear, planar extension dimensions of the fibre mat, the fibres preferably being endless fibres.

4. Method according to one of the preceding claims, characterized in that a polyurethane-based hybrid resin is used.

5. Method according to one of the preceding claims, characterized in that a thermally and/or UV-activatable hardener is used.

6. Method according to one of the preceding claims, characterized in that the fibres of the fibre mats are provided with binders and are in particular only enveloped therewith in such a way that the existing, open (permeable) structure of the fibre mat is maintained.

7. Method according to claim 6, characterized in that the fibre mat is provided only with enough binder for the weight proportion of the fibre mat in the total weight of the fibre mat and binder to be more than 70% and preferably at least 80%.

8. Method according to one of the preceding claims, characterized in that the fibre mat, provided with the binder and optionally after applying a dense, shapable covering, is moulded following the application of vacuum by means of a mould.

9. Method according to one of the preceding claims, characterized in that, prior to curing, the blank is cooled, in particular by cooling the mould.

10. Method according to one of the preceding claims, characterized in that the blank as such, prior to the moulding of the moulding is cured in thermosetting manner by heating to a temperature above the moulding temperature and/or by UV radiation.

11. Method according to one of the preceding claims, characterized in that initially, optionally overlapping areas of the blank are cured and subsequently the blank is completely cured.

12. Method according to one of the claims 1 to 11, characterized in that at least one cured blank is moulded with the moulding material, particularly two blanks with an interposed moulding material, accompanied by heat action to provide the moulding.

13. Method according to one of the claims 1 to 12, characterized in that a fibre-reinforced moulding material, particularly in the form of a fibrereinforced reaction resin or sheet moulding compound (SMC) is used.

14. Fibre-reinforced plastic moulding, characterized in that it is moulded from a blank (5) formed by a fibre mat (1) provided with a binder (3) which is thermoplastic at the heating temperature and curing in thermosetting manner under the action of heat and fibre-reinforced SMC moulding material applied thereto.

15. Fibre-reinforced plastic moulding according to claim 14, characterized in that the fibres (2) of the blank (5) at least have a length which substantially corresponds to the linear, planar extension dimensions of the preliminary product or the fibre mat (1) and are preferably endless fibres (2).

16. Fibre-reinforced plastic moulding according to claim 14 or 15, characterized in that the fibres (2) of the blank (5) are so provided, particularly enveloped, with the binder (3), that the existing, open (permeable) fibre structure of the blank (5) is maintained.

17. Fibre-reinforced plastic moulding according to claim 16, characterized in that the blank (5) is stiff after impregnation at ambient temperature.

18. Fibre-reinforced plastic moulding according to one of the claims 16 or 17, characterized in that the binder (3) remains in thermoplastic form up to the activation temperature of its hardener and which is in particular at least 50°C, and is only cured above said temperature.

19. Fibre-reinforced plastic moulding according to one of the claims 14 to 18, characterized in that the binder (3) has a polyurethane-based resin with a thermally and/or UV-activatable hardener.

20. Fibre-reinforced plastic moulding according to one of the claims 14 to 19, characterized in that the fibre mat (1) is a knitted or woven fabric or an interlaid scrim, particularly of glass, aramide and/or carbon fibres.

21. Fibre-reinforced plastic moulding according to one of the claims 14 to 20, characterized in that, after impregnation, the fibre proportion of the blank (5) is more than 70% by weight and in particular at least 80% by weight.

22. Fibre-reinforced plastic moulding according to one of the claims 14 to 21, characterized in that it has several blanks.

23. Fibre-reinforced plastic moulding according to one of the claims 14 to 22, characterized in that surface areas forming the visible sides are formed by the moulding material (7).

## Revendications

1. Procédé pour fabriquer une pièce de forme en matière plastique renforcée par des fibres, caractérisé en ce que l'on préforme tout d'abord une natte de fibres pourvue d'un adhésif provenant d'un couple résine-durcisseur, à une température pour laquelle le couple résine-durcisseur présente un comportement thermoplastique, que l'on durcit ensuite par duroplasticité en une préforme, et en ce que l'on verse ensuite sur la préforme ainsi fabriquée une matière moulable dite SMC et l'on compacte par pressage cette préforme avec cette matière moulable en une pièce de forme.

2. Procédé selon la revendication 1, caractérisé en ce que l'on utilise comme natte un tissu, un tricot ou une nappe notamment en fibres de verre, de carbone et/ou d'aramide.

3. Procédé selon l'une des revendications 1 ou 2, caractérisé en ce que l'on fabrique la natte de fibres à partir de fibres qui présentent une longueur correspondant essentiellement au moins à l'étendue linéaire plane de la natte de fibres, les fibres étant de préférence des fibres continues.

4. Procédé selon l'une des revendications précédentes, caractérisé en ce que l'on utilise une résine hybride à base de polyuréthane.

5. Procédé selon l'une des revendications précédentes, caractérisé en ce que l'on utilise un durcisseur à activation thermique et/ou par ultraviolets.

6. Procédé selon l'une des revendications précédentes, caractérisé en ce que l'on encolle les fibres avec l'adhésif d'une manière telle, notamment en les enveloppant uniquement, que la structure ouverte (poreuse) existant en soi de la natte de fibres est conservée.

7. Procédé selon l'une des revendications précédentes, caractérisé en ce que l'on encolle la natte de fibres avec seulement la quantité suffisante d'adhésif de façon que la proportion en poids de la natte de fibres sur le poids total de la natte de fibres et de l'adhésif soit supérieure à 70 %, et de préférence au moins égale à 80 %.

8. Procédé selon l'une des revendications précédentes, caractérisé en ce que l'on déforme par pression sur un moule la natte de fibres pourvue d'adhésif, le cas échéant en la recouvrant d'une couverture étanche et déformable.

9. Procédé selon l'une des revendications précédentes, caractérisé en ce que l'on refroidit la préforme avant le durcissement, notamment en refroidissant le moule.

10. Procédé selon l'une des revendications précédentes, caractérisé en ce que l'on durcit par duroplasticité la préforme en tant que telle - avant la compression de la pièce de forme - en réchauffant à une température située au-dessus de la température de formage et/ou par exposition au rayonnement ultraviolet.

11. Procédé selon l'une des revendications précédentes, caractérisé en ce que l'on durcit tout d'abord des zones individuelles de la préforme, qui le cas échéant se recouvrent les unes les autres, et que l'on durcit ensuite l'ensemble de la préforme.

12. Procédé selon l'une des revendications 1 à 11, caractérisé en ce que l'on conforme par compactage en une pièce de forme, en appliquant de la chaleur, au moins une préforme durcie avec de la matière moulable, et notamment deux préformes avec de la matière moulable disposée entre elles.

13. Procédé selon l'une des revendications 1 à 12, caractérisé en ce que l'on utilise une matière moulable renforcée par des fibres, notamment sous la forme d'une résine de réaction renforcée par des fibres du type SMC (composé de moulage en feuille).

14. Pièce de forme en matière plastique renforcée par des fibres, caractérisée en ce qu'elle est conformée par compactage à partir d'une préforme (5) obtenue par chauffage à partir d'une natte de fibres (1) avec un adhésif (3) à durcissement duroplastique qui est thermoplastique à la température de chauffe, et d'une matière moulable dite SMC renforcée par des fibres, répandue sur cette préforme (5).

15. Pièce de forme en matière plastique renforcée par des fibres selon la revendication 14, caractérisée en ce que les fibres (2) de la préforme (5) présentent une longueur correspondant essentiellement au moins à l'étendue linéaire plane de la natte de fibres (1), et sont de préférence des fibres continues.

16. Pièce de forme en matière plastique renforcée par des fibres selon l'une des revendications 14 ou 15, caractérisée en ce que les fibres (2) de la préforme (5) sont encollées par de l'adhésif (3) d'une manière telle, notamment en étant enveloppées, que la structure ouverte (poreuse) existant en soi de la natte de fibres est conservée dans la préforme (5).

17. Pièce de forme en matière plastique renforcée par des fibres selon la revendication 16, caractérisée en ce que la préforme (5) est rigide après avoir été imprégnée à la température ambiante.

18. Pièce de forme en matière plastique renforcée par des fibres selon l'une des revendications 16 ou 17, caractérisée en ce que l'adhésif (3) demeure thermoplastique jusqu'à la température d'activation de son durcisseur, qui est notamment d'au moins 50°, et ne durcit qu'au dessus de cette température.

19. Pièce de forme en matière plastique renforcée par des fibres selon l'une des revendications 14 à 18, caractérisée en ce que l'adhésif (3) comprend une résine à base de polyuréthanne et un durcisseur à activation thermique et/ou par ultraviolets.

20. Pièce de forme en matière plastique renforcée par des fibres selon l'une des revendications 14 à 19, caractérisée en ce que la natte de fibres (1) est un tissu, un tricot ou une nappe notamment en fibres de verre, d'aramide et/ou de carbone.

21. Pièce de forme en matière plastique renforcée par des fibres selon l'une des revendications 14 à 20, caractérisée en ce que la proportion de fibres de la préforme (5) après imprégnation est supérieure à 70 % en poids, et notamment au moins égale à 80 % en poids.

22. Pièce de forme en matière plastique renforcée par des fibres selon l'une des revendications 14 à 21, caractérisée en ce qu'elle comprend plusieurs préformes.

23. Pièce de forme en matière plastique renforcée par des fibres selon l'une des revendications 14 à 22, caractérisée en ce que des zones de surface formant des faces visibles sont conformées par la matière moulable (7).
